# EUROPÄISCHE PATENTSCHRIFT

(11) **EP 0 586 775 B1**
(45) Veröffentlichungstag und Bekanntmachung des Hinweises auf die Patenterteilung: **24.07.1996**
(21) Anmeldenummer: 92810700.2
(22) Anmeldetag: 11.09.1992
(51) Int. Cl.: F02M 63/02, F02M 45/04

(54) **Verfahren zum Brennstoffeinspritzen bei Dieselbrennkraftmaschinen**
Method to inject fuel in Diesel engines
Méthode d'injection de carburant pour un moteur Diesel

(43) Veröffentlichungstag der Anmeldung: 16.03.1994
(73) Patentinhaber: NEW SULZER DIESEL AG, CH-8401 Winterthur (CH)
(72) Erfinder: Schütz, Mathias, CH-8037 Zürich (CH)
(74) Vertreter: Hammer, Bruno, Dr.

(56) Entgegenhaltungen:
- DE-B- 1 042 964
- FR-A- 2 351 272
- US-A- 4 531 488
- PATENT ABSTRACTS OF JAPAN vol. 9, no. 313 (M-437)(2036) 10. Dezember 1985 & JP-A-60 147 525 (MITSUBISHI) 3. August 1985

## Beschreibung

Die Erfindung bezieht sich auf ein Verfahren zum Einspritzen von Brennstoff in den Brennraum eines Zylinders einer Hubkolbenbrennkraftmaschine der Dieselbauart, wobei die gesamte, für einen Arbeitstakt bestimmte Brennstoffmenge mittels mindestens zweier Einspritzdüsen eingespritzt wird, die so im Brennraum angeordnet sind, dass die aus jeweils einer Einspritzdüse austretenden Brennstoffstrahlen nicht die aus den jeweils anderen Einspritzdüsen austretenden Brennstoffstrahlen beeinflussen. Sie bezieht sich ferner auf eine Anordnung zum Durchführen des Verfahrens.

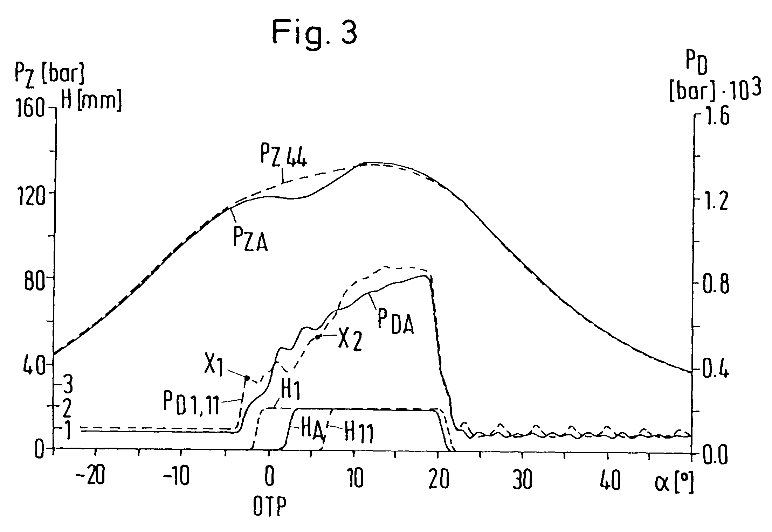

Bei den üblichen Einspritzverfahren dieser Art wird die pro Arbeitstakt benötigte Brennstoffmenge mit Hilfe von gleichzeitig öffnenden Einspritzdüsen in den Brennraum eingebracht, die kurz nach dem Erreichen des oberen Totpunktes (OTP) des Arbeitskolbens öffnen und etwa 20° Kurbelwinkel nach dem OTP wieder schliessen. Bei diesem Verfahren stellt sich im Zylinder ein Druckverlauf ein, der durch die ausgezogene Linie p_{ZA} in Fig.3 wiedergegeben ist und der dadurch gekennzeichnet ist, dass kurz nach dem OTP der Druck kurzzeitig konstant verläuft oder sogar etwas absinkt und dann unter der Wirkung des gezündeten Brennstoffs wieder relativ steil bis zu einem Maximum ansteigt. Dieser Druckverlauf ist nicht ideal, da der maximal mögliche Zylinderdruck, der durch die Konstruktion der Brennkraftmaschine gegeben ist, nicht optimal ausgenutzt wird. Auch der steile Druckanstieg ist wegen der Beanspruchung der Maschinenkonstruktion nicht erwünscht. Ideal wäre ein Druckverlauf, bei dem der maximale Druck im Bereich des OTP konstant wäre.

Gestufte Einspritzungen mittels zweier Einspritzdüren sind allgemein aus der DE-B-1 042 964 oder aus der FR-A-2 351 272 bekannt.

Der Erfindung liegt die Aufgabe zugrunde, ein Verfahren und eine Anordnung zum Einspritzen von Brennstoff für Dieselbrennkraftmaschinen zu schaffen, bei dem bzw. der der Verlauf des Zylinderdruckes im Bereich des oberen Totpunktes möglichst weit an einen konstanten Druckverlauf angenähert ist.

Diese Aufgabe wird erfindungsgemäss durch die Merkmale gemäß der Ansprüche 1 bzw. 4 gelöst.

Durch das gestaffelte Einspritzen der gesamten Brennstoffmenge wird die in Fig.3 für das bekannte Verfahren gezeigte "Einbuchtung" des Zylinderdrucks vermieden, indem durch das frühere Einspritzen der Brennstoffmenge mit Hilfe der ersten Einspritzdüse kurz vor dem oberen Totpunkt ein allmähliches Weiteransteigen des Druckes erreicht wird. Damit wird der maximal mögliche Zylinderdruck besser als bisher ausgenutzt. Ausserdem ist wegen des allmählichen Druckanstiegs die Beanspruchung der Maschinenkonstruktion verbessert.

Eine besonders einfache Anordnung zum Durchführen des erfindungsgemässen Verfahrens ist dadurch gekennzeichnet, dass Einspritzdüsen mit von Schliessfedern geschlossen gehaltenen Düsennadeln verwendet werden, bei denen die Schliessfedern unterschiedlich stark dimensioniert und/oder vorgespannt sind.

Ein Ausführungsbeispiel der Erfindung wird in der folgenden Beschreibung anhand der Zeichnung näher erläutert. Es zeigen:
- Fig.1: schematisch vereinfacht eine Einspritzdüsenanordnung zum Durchführen des erfindungsgemässen Verfahrens,
- Fig.2: eine Ansicht der Einspritzdüsenanordnung, vom Brennraum her gesehen, und
- Fig.3: ein Diagramm über Druckverläufe und Nadelhübe in Funktion des Kurbelwinkels Alpha.

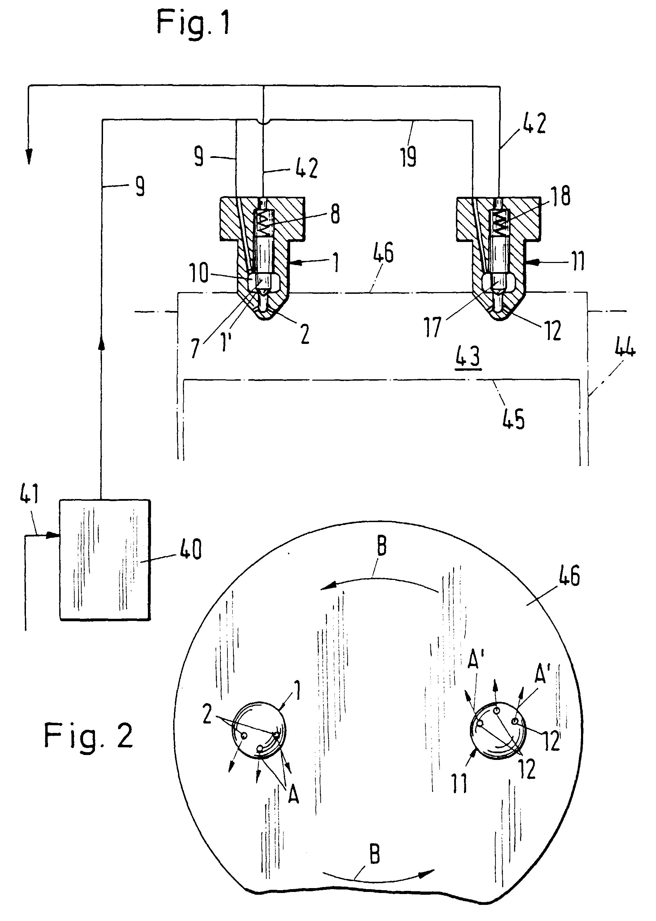

Von einer nicht näher dargestellten mehrzylindrigen, langsamlaufenden 2-Takt- Hubkolbenbrennkraftmaschine, die nach dem Diesel-Verfahren arbeitet, ist in Fig.1 ein Zylinder 44 angedeutet, in dem ein Arbeitskolben 45 auf- und abbeweglich geführt ist. Der Arbeitskolben 45 begrenzt zusammen mit einem auf den Zylinder 44 aufgesetzten Zylinderdeckel 46 einen Brennraum 43, in den mittels einer ersten Einspritzdüse 1 und einer zweiten Einspritzdüse 11 flüssiger Brennstoff, nämlich Dieselöl, in weiter unten beschriebener Weise eingespritzt wird. Im Zentrum des Zylinderdeckels 46 ist ein nicht dargestelltes Auslassventil angeordnet, so dass im Zylinder zu Beginn der Aufwärtsbewegung des Arbeitskolbens 45 Längsspülung auftritt.

Die erste Einspritzdüse 1 von an sich bekannter Bauart weist eine Düsennadel 7 auf, die unter der Wirkung einer Schliessfeder 8 gegen eine Sitzfläche 1' im Gehäuse der Einspritzdüse gedrückt wird. In Fig.1 unterhalb der Sitzfläche 1' ist im Düsengehäuse ein Sackloch vorgesehen, von dem Spritzlöcher 2 ausgehen, die in den Brennraum 43 münden. In Fig.1 oberhalb der Sitzfläche 1' ist im Düsengehäuse eine Druckkammer 10 vorgesehen, die über eine Druckleitung 9 mit einer Einspritzpumpe 40 verbunden ist, der über eine Leitung 41 Brennstoff aus einem nicht dargestellten Reservoir zugeführt wird. Während der Einspritzphase der Einspritzdüse 1 ist der Druck des über die Leitung 9 der Druckkammer 10 zugeführten Brennstoffs so gross, dass die Schliesskraft der Feder 8 überwunden wird und die Düsennadel 7 von der Sitzfläche 1' abhebt, so dass der Brennstoff über die Spritzlöcher 2 in den Brennraum 43 gelangt. Am Gehäuse der Einspritzdüse 1 ist eine Leitung 42 angeschlossen, die zum Abführen von Leckbrennstoff dient.

Die zweite Einspritzdüse 11 ist gleich aufgebaut wie die Einspritzdüse 1, unterschiedlich ist nur, dass die auf die Düsennadel 17 wirkende Schliessfeder 18 stärker dimensioniert ist als die Schliessfeder 8. Dementsprechend muss der Druck des über die von der Leitung 9 abzweigenden Leitung 19 der Einspritzdüse 11 zugeführten Brennstoffs grösser sein, damit die Nadel 17 öffnet, als der Oeffnungsdruck der Nadel 7. Es ist auch möglich, die Schliessfeder 18 gleich gross zu dimensionieren wie die Feder 8 und dann die Vorspannung der Feder 18 grösser einzustellen.

Wie Fig.2 zeigt, sind die beiden Einspritzdüsen 1 und 11 diametral zueinander im Zylinderdeckel 46 angeordnet, und zwar so, dass die Spritzlöcher 2 und 12 in entgegengesetzte Richtungen den Brennstoff strahlenförmig austreten lassen (Pfeile A bzw. A'). Dies deshalb, weil sich im Brennraum 43 beim Aufwärtsbewegen des Arbeitskolbens 45 eine Drallströmung der Verbrennungsluft (Pfeile B) ergibt und weil die aus den Spritzlöchern 2 und 12 austretenden Brennstoffstrahlen im wesentlichen die gleiche Richtung aufweisen sollen. Wesentlich für die Anordnung der Einspritzdüsen ist, dass den jeweils aus ihnen austretenden Brennstoffstrahlen ein Abschnitt des Brennraums 43 zugeordnet, in den die Brennstoffstrahlen der jeweils benachbarten Einspritzdüsen nicht eindringen.

Wie schon erwähnt, zeigt in Fig.3 die ausgezogene Linie p_{ZA} den Verlauf des Zylinderdruckes beim Einspritzen der gesamten Brennstoffmenge mit Hilfe mehrerer gleichzeitig öffnender Einspritzdüsen pro Zylinder. Die gestrichelte Linie p_{Z44} zeigt im Vergleich dazu den Druckverlauf im Zylinder 44 beim erfindungsgemässen Einspritzen mit Hilfe zweier gestaffelt öffnender Einspritzdüsen. Weiter zeigt die Fig.3 den Verlauf des Brennstoffdruckes vor den Einspritzdüsen, und zwar mit der ausgezogenen Linie p_{DA} für die bekannte Einspritzung und mit der gestrichelten Linie p_{D1,11} für die erfindungsgemässe Einspritzung. Schliesslich ist in Fig.3 noch der Nadelhub dargestellt, und zwar mit der ausgezogenen Linie H_{A} der Nadelhub der Einspritzdüsen beim bekannten Verfahren und mit H₁ und H₁₁ der Nadelhub der gestaffelt öffnenden Einspritzdüsen 1, 11 beim erfindungsgemässen Verfahren.

Das erfindungsgemässe Verfahren mit der beschriebenen Vorrichtung läuft wie folgt ab: Beim Aufwärtshub des Arbeitskolbens 45 wird nach dem Schliessen des Auslassventils die Luft im Brennraum 43 verdichtet, wobei der Druck im Zylinder 44 ansteigt (Kurve p_{Z44}). Gegen Ende des Aufwärtshubes des Arbeitskolbens 45 steigt auch der Druck auf der Förderseite der Brennstoffpumpe 40, der sich über die Leitungen 9 und 19 zu den Einspritzdüsen 1 und 11 fortpflanzt. Bei einem Pumpendruck von ungefähr 300 bar wird die Schliesskraft der Feder 8 in der ersten Einspritzdüse 1 überwunden, so dass bei etwa 2° Kurbelwinkel vor dem oberen Totpunkt OTP die Nadel 7 in der Einspritzdüse 1 öffnet und das Einspritzen von Dieselöl beginnt (Punkt X₁). Durch das Zünden und Verbrennen dieses Brennstoffs im Brennraum 43 steigt der Druck im Zylinder 44 langsam an (Kurve p_{Z44}), während die zweite Einspritzdüse 11 noch geschlossen bleibt. Während einer sich über 8° Kurbelwinkel erstreckenden Zeitspanne des Einspritzens mittels der ersten Einspritzdüse 1 verläuft der von der Brennstoffpumpe 40 erzeugte Druck derart, dass der Oeffnungsdruck der zweiten Einspritzdüse 11 nicht überschritten wird. In Fig.3 zeigt sich dies durch Absenken des Druckes p_{D} in der Leitung 9 zwischen den Punkten X₁ und X₂. Es ist auch möglich, den Druck p_{D} während dieser Zeitspanne annähernd konstant zu halten. Auf der Förderseite der Brennstoffpumpe 40 steigt dann der Druck weiter, bis bei etwa 500 bar die Schliesskraft der stärker dimensionierten Feder 18 in der zweiten Einspritzdüse 11 überwunden wird und auch die Nadel 17 öffnet (Punkt X₂). Von nun ab sind also beide Einspritzdüsen 1 und 11 offen, bis bei einem Kurbelwinkel von ungefähr 22° nach OTP beide Einspritzdüsen schliessen, womit der Einspritzvorgang beendet wird. Durch das Oeffnen der zweiten Einspritzdüse 11 und die damit verbundene verstärkte Verbrennung steigt der Druck im Zylinder 44 noch etwas an. Ueber den gesamten Einspritzvorgang betrachtet ist beim erfindungsgemässen Verfahren der Druckverlauf im Zylinder 44 (Kurve p_{Z44}) gleichmässiger als bei dem bekannten Einspritzverfahren (Kurve p_{ZA}). Ausserdem ist der Druckverlauf des gesamten Einspritzvorganges stufenförmig. Dadurch dass während des Einspritzens mittels der ersten Einspritzdüse der beschriebene, von der Brennstoffpumpe 40 erzeugte Druckverlauf eingehalten wird, kann das Zeitintervall zwischen X₁ und X₂ gesteuert werden, und zwar durch entsprechende Formgebung des Antriebsnockens der Brennstoffpumpe.

Abweichend von dem beschriebenen Ausführungsbeispiel kann das erfindungsgemässe Verfahren auch mit mehr als zwei Einspritzdüsen durchgeführt werden, wobei dann die Düsen in der zuvor beschriebenen Weise bezüglich der Brennstoffstrahlen im Brennraum 43 verteilt angeordnet werden. In einem solchen Fall öffnet dann zunächst die erste Einspritzdüse allein und die restlichen Einspritzdüsen öffnen später zur gleichen Zeit oder auch gestaffelt.

Das gestaffelte Oeffnen der Einspritzdüsen lässt sich - anstatt mit verschieden stark dimensionierten oder vorgespannten Schliessfedern - auch dadurch erreichen, dass die Oeffnungsbewegungen der Nadeln in den Einspritzdüsen elektronisch angesteuert werden, indem die Nadeln unter der Wirkung von Elektromagneten stehen.

Abweichend von dem beschriebenen Verfahrensablauf in Fig.3 kann der Beginn des Einspritzens der ersten Einspritzdüse auch nach dem oberen Totpunkt liegen. Dies ist abhängig vom sog. Zündsprung, d.h. dem Verhältnis von Zünddruck zu Kompressionsdruck. Unter "Kompressionsdruck" ist dabei der Druck der im Zylinder verdichteten Luft im OTP ohne Verbrennung zu verstehen. Bei kleinem Verhältnis kann der Einspritzbeginn nach dem OTP liegen und sich mit grösser werdendem Verhältnis zum OTP hin verschieben.

## Patentansprüche

1. Verfahren zum Einspritzen von Brennstoff in den Brennraum (43) eines Zylinders (44) einer langsamlaufenden 2-Takt-Hubkolbenbrennkraftmaschine der Dieselbauart, wobei die gesamte, für einen Arbeitstakt bestimmte Brennstoffmenge mittels mindestens zweier je ein Gehäuse und eine Düsennadel (7) aufweisender Einspritzdüsen (1,11) eingespritzt wird, die so im Brennraum verteilt angeordnet sind, dass die aus jeweils einer Einspritzdüse austretenden Brennstoffstrahlen nicht die aus den jeweils anderen Einspritzdüsen austretenden Brennstoffstrahlen beeinflussen, wobei das Einspritzen der gesamten, für einen Arbeitstakt bestimmten Brennstoffmenge derart erfolgt, dass zunächst eine erste Einspritzdüse im Bereich des oberen Totpunktes des dem Zylinder zugeordneten Arbeitskolbens öffnet und die zweite Einspritzdüse später während der noch offenen ersten Einspritzdüse öffnet und dass zwischen dem Oeffnen der ersten Einspritzdüse und dem Oeffnen der zweiten Einspritzdüse eine Zeitspanne von mindestens 4° Kurbelwinkel eingehalten wird.

2. Verfahren nach Anspruch 1, dadurch gekennzeichnet, dass die Zeitspanne zwischen dem Oeffnen der ersten und der zweiten Einspritzdüse durch Beeinflussen des Brennstoffdruckes vor den Einspritzdüsen gesteuert wird.

3. Verfahren nach Anspruch 1 oder 2, dadurch gekennzeichnet, dass die erste und die zweite Einspritzdüse ihre Einspritzphase gemeinsam beenden.

4. Anordnung zum Durchführen des Verfahrens nach Anspruch 1, dadurch gekennzeichnet, dass mindestens zwei je ein Gehäuse und eine Düsennadel (7) aufweisende, im Brennraum (43) verteilt angeordnete Einspritzdüsen (1,11) vorgesehen sind, die zum Einspritzen der gesamten, für einen Arbeitstakt und einen Zylinder bestimmten Brennstoffmenge zeitlich gestaffelt öffnen, und dass eine an die Einspritzdüsen angeschlossene Brennstoffpumpe (40) vorgesehen ist, die so ausgelegt ist, dass der von ihr erzeugte Brennstoffdruck die zweite Einspritzdüse frühestens 4° Kurbelwinkel nach dem Oeffnen der ersten Einspritzdüse öffnet.

5. Anordnung nach Anspruch 4, mit Düsennadeln aufweisenden Einspritzdüsen, deren Nadeln (7) vom Brennstoffdruck entgegen der Wirkung von Schliessfedern (8,18) öffnen, dadurch gekennzeichnet, dass die beiden Einspritzdüsen unterschiedlich starke Schliessfedern aufweisen.

6. Anordnung nach Anspruch 4, mit Düsennadeln aufweisenden Einspritzdüsen, deren Nadeln (7) vom Brennstoffdruck entgegen der Wirkung von Schliessfedern (8,18) öffnen, dadurch gekennzeichnet, dass bei gleich gross dimensionierten Schliessfedern deren Vorspannung unterschiedlich eingestellt ist.

## Claims

1. A process for the injection of fuel into the combustion chamber (43) of a cylinder (44) of a reciprocating internal combustion engine of the Diesel type, in which the entire quantity of fuel intended for an ignition stroke is injected by means of at least two injection nozzles (1, 11), each including a housing and a valve needle (7), and which are disposed in the combustion chamber so that the jets of fuel leaving each injection nozzle do not influence jets of fuel leaving the other respective injection nozzles, whereby the injection of the entire quantity of fuel intended for an ignition stroke is performed so that firstly a first injection nozzle opens in the region of the upper dead center of the working piston associated with the cylinder and the second injection nozzle opens later while the first injection nozzle is still open and that the period of time between the opening of the first and the second injection nozzle is a crank angle of at least 4°.

2. A process according to Claim 1, characterized in that the period of time between the opening of the first and the second injection nozzle is controlled by influencing the fuel pressure in front of the injection nozzles.

3. A process according to Claim 1 or 2, characterized in that the first and the second injection nozzle end their injection phase together.

4. An arrangement for performing the process according to Claim 1, characterized in that at least two injection nozzles are provided, least two injection nozzles (1, 11), each including a housing and a valve needle (7), which open staggered in time for the injection of the entire quantity of fuel intended for one ignition stroke and one cylinder, the arrangement further including an injection pump (40), connected with the injection nozzles (1, 11) and designed in a way that the period of time between the opening of the first and the second injection nozzle under the pressure of the fuel generated by the injection pump (40) is a crank angle of at least 4°.

5. An arrangement according to Claim 4, having injection nozzles comprising valve needles, the needles (7) of which open by the pressure of the fuel against the action of closing springs (8, 18), characterized in that the two injection nozzles comprise closing springs of different strengths.

6. An arrangement according to Claim 4, having injection nozzles comprising valve needles, the needles (7) of which open by the pressure of the fuel against the action of closing springs,(8, 18) characterized in that when the closing springs have dimensions of the same size they are prestressed differently.

## Revendications

1. Procédé d'injection de carburant dans la chambre de combustion (43) d'un cylindre (44) d'un moteur à combustion interne, à piston alternatif, à deux temps, qui tourne lentement, de type Diesel, dans lequel la quantité totale de carburant, déterminée pour un cycle de fonctionnement, est injectée au moyen de deux injecteurs (1, 11) présentant respectivement un boîtier et une aiguille d'injection (7), injecteurs qui sont disposés de façon répartie dans la chambre de combustion d'une manière telle que les jets de carburant qui sortent d'un injecteur n'influencent pas les jets de carburant qui sortent respectivement des autres injecteurs, l'injection de la quantité totale de carburant déterminée pour un cycle de fonctionnement, ayant lieu d'une manière telle que s'ouvre d'abord un premier injecteur dans la zone du point mort haut du piston associé au cylindre et que le second injecteur s'ouvre plus tard pendant que le premier injecteur est encore ouvert et qu'entre l'ouverture du premier injecteur et l'ouverture du deuxième injecteur on conserve un intervalle de temps correspondant au moins à une rotation de 4° du vilebrequin.

2. Procédé selon la revendication 1, caractérisé en ce que l'intervalle de temps entre l'ouverture du premier et du deuxième injecteur est commandée en influençant la pression du carburant avant les injecteurs.

3. Procédé selon la revendication 1 ou 2, caractérisé en ce que le premier et le deuxième injecteur terminent en même temps leur phase d'injection.

4. Agencement pour la mise en oeuvre du procédé selon la revendication 1, caractérisé en ce que l'on prévoit au moins deux injecteurs (1, 11), présentant chacun un boîtier et une aiguille d'injection (7) et disposés de façon répartie dans la chambre de combustion (43), qui pour injecter la quantité totale de carburant, déterminée pour un cycle de fonctionnement et un cylindre, s'ouvrent de façon échelonnée dans le temps et en ce que l'on prévoit une pompe de carburant (40), raccordée aux injecteurs, qui est conçue de manière que la pression de carburant, qu'elle produit, ouvre le second injecteur au plus tôt quand le vilebrequin a tourné de 4° après l'ouverture du premier injecteur.

5. Agencement selon la revendication 4, avec des injecteurs présentant des aiguilles d'injection , aiguilles (7) qui s'ouvrent par la pression du carburant à l'encontre de l'action de ressorts de fermeture (8, 18), agencement caractérisé en ce que les deux injecteurs présentent des ressorts de fermeture de force différente.

6. Agencement selon la revendication 4, avec des injecteurs présentant des aiguilles d'injection , aiguilles (7) qui s'ouvrent par la pression du carburant à l'encontre de l'action de ressorts de fermeture (8, 18), agencement caractérisé en ce que, dans le cas où leurs ressorts de fermeture sont dimensionnés de la même façon, on règle différemment leur précontrainte.
